# DEMANDE DE BREVET EUROPEEN

(11) **EP 1 582 385 A1**
(43) Date de publication de la demande: **05.10.2005**
(21) Numéro de dépôt: 05101740.8
(22) Date de dépôt: 07.03.2005
(51) Int. Cl.: B60H 3/00

(54) **Dispositif de purification d'air par photocatalyse, pour une installation de chauffage, de ventilation et/ou d'air conditionné d'un habitacle de véhicule notamment**

(30) Priorité: 29.03.2004 FR 0403222
(71) Demandeur: VALEO SYSTEMES THERMIQUES, 78321 Le Mesnil St Denis Cedex (FR)
(72) Inventeur: Giraud, Frédéric, 78610 Le Perray en Yvelines (FR); Hara, Shinichi VALEO SYSTEMES THERMIQUES, 78321 Le Mesnil St Denis Cedex (FR)

(57) **Abrégé**

L'invention a pour objet un dispositif de traitement d'air par photocatalyse circulant à l'intérieur d'un circuit d'une installation de chauffage, de ventilation et/ou d'air conditionné, notamment d'un habitacle de véhicule. Ce dispositif comporte une source lumineuse d'irradiation d'au moins une paroi (1,2) revêtue d'un agent photocatalytique et placée dans le chemin de circulation d'air. La source lumineuse associe au moins un organe générateur de lumière (5,5') et un photophore (8) à facettes (10,11), à travers lequel émerge la lumière générée pour irradier la paroi distante (1,2) d'un organe de l'installation revêtue de l'agent photocatalytique. Le photophore (8) est organisé en pluralité de réglettes (17) espacées ou en coiffe conique (9) couvrant l'organe générateur de lumière (6).

## Description

### Domaine technique de l'invention.

L'invention est du domaine des dispositifs de chauffage, de ventilation et/ou d'air conditionné pour habitacle de véhicule notamment, et plus particulièrement des dispositifs pour le traitement de l'air par photocatalyse. Elle a pour objet un tel dispositif associant une paroi revêtue d'un agent photocatalyseur et une source lumineuse d'irradiation de cette paroi.

### Etat de la technique.

On rappelle qu'une installation de chauffage, de ventilation et/ou d'air conditionné pour habitacle d'un véhicule est couramment équipée d'organes de purification de l'air, qui sont placés dans le circuit d'air. Ces organes sont par exemple constitués d'un ioniseur, d'un filtre à particules, d'un dispositif de traitement par photocatalyse, ou d'un filtre spécifique à gaz. On comprendra que cette liste n'est pas exhaustive et qu'elle n'est en rien limitative quant à la portée de la présente invention exposée plus loin, et que ces organes de purification cités pour exemple peuvent être installés seuls ou en combinaison. On rappelle aussi qu'une telle installation de chauffage, de ventilation et/ou d'air conditionné comprend un évaporateur interposé dans le circuit d'air en aval du filtre à particules.

Plus particulièrement en ce qui concerne le dispositif de traitement par photocatalyse de l'air ventilé, ce dernier est notamment destiné à détruire les micro-organismes et purifier les gaz véhiculés dans l'air ambiant. Un tel dispositif associe une source lumineuse d'irradiation d'une paroi revêtue d'un agent photocatalytique, tel que du dioxyde de titane (Ti02) ou analogue. La source lumineuse, placée à proximité de ces parois pour leur irradiation, est notamment un émetteur de rayons ultraviolets (UV), par exemple constitué d'une lampe cylindrique, ou encore d'une pluralité de diodes électroluminescentes supportées par un élément plan, tel que plaque, grille ou analogues.

Une difficulté à surmonter réside dans l'obtention d'une réaction photocatalytique optimisée, à partir de l'exploitation d'une surface maximale revêtue de l'agent photocatalytique pour une puissance d'irradiation donnée, sans pour autant que la source lumineuse ne fasse obstacle à une circulation satisfaisante de l'air. Plus précisément, il est souhaitable de choisir une surface revêtue de l'agent photocatalytique dont l'étendue irradiée est la plus importante possible, tout en réduisant au mieux l'énergie nécessaire au fonctionnement de la source lumineuse. Il est aussi souhaitable de disposer cette dernière de sorte que l'obstacle qu'elle constitue à l'encontre de la circulation d'air une perte de charge minimale et ne tende pas à créer des turbulences génératrices de nuisances sonores. En outre, l'organisation du dispositif de traitement par photocatalyse de l'air ventilé ne doit pas induire un accroissement indésirable de l'encombrement du circuit d'air, entendu transversalement au sens de circulation de l'air.

Selon une première solution connue, les parois globalement planes de l'évaporateur ou de l'un des filtres sont mises à profit pour être revêtue de l'agent photocatalytique. On pourra notamment se reporter aux documents W003086791 (VALEO CLIMATISATION) et JP2003070885 (ZEXEL VALEO CLIMATE CONTROL CORP) qui décrivent des dispositifs de traitement de l'air ventilé par photocatalyse relevant d'une telle solution. Selon WO03086791, la source lumineuse est disposée latéralement au trajet de l'air de part et d'autre de l'une des parois d'un évaporateur, voire aussi d'un filtre, en étant orientée de manière à irradier de biais la paroi. Selon JP2003070885, les replis ou cloisons d'un filtre à particules sont exploités pour loger la source lumineuse orientée transversalement à ces replis, pour en irradier les faces suivant leur orientation générale. Il est cependant apparu à l'usage que si les conséquences de la présence de la source lumineuse sont réduites au regard de la circulation de l'air, le rendement du dispositif devait être amélioré, tant au regard de l'exploitation de la puissance de la lumière produite par la source lumineuse, qu'au regard de l'étendue de surface réellement active pour la réaction photocatalytique.

Selon une deuxième solution connue, il est proposé de disposer la source lumineuse en travers du volume de circulation d'air, et d'organiser cette source lumineuse en source génératrice entourée d'une paroi translucide en relation avec la lumière générée, cette paroi translucide étant revêtue à sa face extérieure de l'agent photocatalytique. On pourra notamment se reporter au document US5865959 (UNITED TECHNOLOGIES CORP) qui propose une telle solution. Cependant, si le rendement de la source lumineuse et l'optimisation de la surface active pour la réaction photocatalytique en sont améliorés, la présence de la source lumineuse en travers du chemin de circulation de l'air induit des turbulences et une perte de rendement de la circulation d'air, qui sont inopportunes.

Il en ressort finalement que le problème général à résoudre réside dans l'organisation d'un dispositif de traitement par photocatalyse de l'air ventilé, qui offre un compromis satisfaisant au regard des contraintes opposées qui ont été relevées ci-dessus, l'antagonisme de ces contraintes étant habituellement considérées dans le domaine comme devant être acceptées.

### Objet de l'invention.

Le but de la présente invention est de proposer un dispositif de traitement d'air par photocatalyse circulant à l'intérieur d'un circuit d'une installation de chauffage, de ventilation et/ou d'air conditionné, notamment d'un habitacle de véhicule. Il est plus particulièrement visé par la présente invention de proposer un tel dispositif qui offre un rendement satisfaisant, tant au regard de la réaction photocatalytique qu'au regard du débit de l'air circulant à l'intérieur du circuit, sans pour autant être une source d'accroissement significatif de l'encombrement de ce dernier.

Le dispositif de la présente invention comporte une source lumineuse d'irradiation d'au moins une paroi revêtue d'un agent photocatalytique, cette paroi étant placée dans le chemin de circulation d'air.

Selon la présente invention un tel dispositif est principalement reconnaissable en ce que la source lumineuse associe au moins un organe générateur de lumière et un photophore à facettes, à travers lequel émerge la lumière générée pour irradier la paroi distante d'un organe de l'installation revêtue de l'agent photocatalytique.

Ces dispositions sont telles que la paroi de l'organe de l'installation à irradier étant susceptible de présenter des irrégularités ou des recoins, voire notamment de manière analogue des passages profonds à travers lesquels circulent l'air, ces passages sont irradiées grâce à la fragmentation du faisceau lumineux produit par l'organe générateur de lumière en une pluralité de faisceaux élémentaires projetés localement sur la paroi suivant des orientations respectives. On comprendra que les caractéristiques en nombre, en orientation et en surface d'irradiation de ces faisceaux élémentaires sont déterminées par le nombre, les dimensions et les orientations des facettes du photophore. Il ressort de ces dispositions que la surface irradiée de la paroi est optimisée à partir de son irradiation non seulement suivant ses dimensions générales d'extension, mais aussi suivant la dimension correspondante à son épaisseur.

Il en ressort finalement que la surface globale irradiée est importante, avec pour conséquence un rendement de photocatalyse optimisé au regard de l'énergie nécessaire pour l'organe générateur de lumière, dont la consommation est susceptible d'être réduite par rapport aux dispositifs de l'art antérieur. Par ailleurs, la présence du photophore permet d'agencer et de conformer librement la source lumineuse selon les cas d'application, indépendamment de la structure de l'organe générateur de lumière qui quant à lui est susceptible d'être écarté du chemin de circulation de l'air à l'intérieur du circuit, sans pour autant porter atteinte à une surface d'irradiation satisfaisante de la paroi.

En outre, cette faculté d'agencement libre du photophore permet notamment de l'organiser de manière à ne pas constituer un obstacle significatif à la circulation d'air à l'intérieur du circuit.

Le photophore est notamment formé à partir d'un matériau translucide tel que le méthacrylate ou produit dérivé, tel que polyméthacrylate de méthyle, ou autre matériau analogue. L'agent photocatalytique est quant à lui à la manière connue dans le domaine du dioxyde de titane (Ti02) ou analogue. L'organe générateur de lumière est notamment générateur de rayons ultraviolets (UV), et est indifféremment constitué, selon différentes variantes de réalisation citées pour exemple, d'une lampe cylindrique, ou encore d'une pluralité de diodes électroluminescentes fixées sur un support organisé en plaque, en grille ou analogues. La paroi revêtue de l'agent photocatalytique est par exemple, à la manière connue en soi dans le domaine, la paroi d'un organe distinct de l'installation, telle que la paroi d'un évaporateur ou celle d'un organe de filtration ou analogue, voire la paroi d'un conduit, tel qu'il sera décrit plus loin.

Les facettes du photophore sont préférentiellement ménagées sur l'une au moins de ses faces externes en étant orientées suivant au moins deux plans concourants par rapport à un profil du photophore pris suivant l'une quelconque au moins de ses dimensions. Par exemple, la face du photophore comportant les facettes présente un profil crénelé ou en dents de scie. On comprendra qu'un tel profil est susceptible d'être pris en considération suivant l'une quelconque au moins des dimensions d'extension du photophore. Notamment, il est particulièrement avantageux d'agencer les facettes en prismes répartis, régulièrement ou non, sur la face correspondante du photophore, deux facettes voisines étant susceptibles de présenter en elles-mêmes des faces élémentaires orientées suivant au moins deux plans concourants.

Selon une forme de réalisation donnée à titre indicatif, les facettes sont inclinées suivant l'une quelconque des dimensions d'extension du photophore d'un angle A1 de l'ordre compris entre 10° et 30°, pour une extension des facettes de l'ordre comprise entre 3 mm et 7 mm.

Selon une première variante de réalisation, le photophore est avantageusement formé d'une pluralité de réglettes espacées les unes des autres d'une distance D1 et en relation mutuelle à l'une au moins de leurs extrémités longitudinales avec un dit organe générateur de lumière. Ce dernier est de préférence placé latéralement à la paroi irradiée pour l'éloigner du chemin de circulation d'air. On notera que pour exploiter au mieux les facultés du photophore, il est préféré de mettre l'une et l'autre des extrémités longitudinales des réglettes en relation avec un organe générateur de lumière respectif.

La distance D1 de séparation des réglettes les unes des autres est à titre indicatif comprise entre le double et le quadruple de la hauteur H1 des réglettes. Il est apparu qu'une proportion satisfaisante était un espacement entre les réglettes de l'ordre du triple de leur hauteur.

L'organe générateur de lumière étant un organe allongé étendu le long des faces latérales du photophore, celui-ci constitue avantageusement un support des réglettes, sur lequel ces dernières sont rapportées par l'intermédiaire d'un organe de jonction. On notera tel qu'il l'a déjà été évoqué précédemment, que l'organe allongé formant l'organe générateur de lumière est par exemple une lampe, cylindrique, ou encore une plaque ou analogue porteuse de diodes électroluminescentes, qui sont avantageusement respectivement affectées aux réglettes, par groupe ou par unicité.

Ledit organe de jonction est par exemple constitué d'un organe élastiquement déformable, qui est conjointement en prise sur l'organe générateur de lumière et sur les réglettes.

On notera que cet organe de jonction peut être indifféremment constitué, selon diverses variantes de réalisation, soit d'un organe unique en prise sur l'ensemble des réglettes, qui sont le cas échéant reliées entre elles, soit d'une pluralité d'organes élémentaires affectés à chacune des réglettes sur lesquelles ils sont respectivement en prise conjointement avec l'organe générateur de lumière. On relèvera cependant que l'utilisation d'un organe de jonction unique est susceptible d'être exploitée pour masquer la face de l'organe générateur de lumière opposée à celle en relation avec les réglettes, pour former une chambre noire permettant d'optimiser l'exploitation de la lumière produite en évitant des déperditions.

Selon une deuxième variante de réalisation, le photophore est notamment organisé en coiffe entourant l'organe générateur de lumière. Cette coiffe, dont la face externe comporte les facettes, est préférentiellement évasée pour conférer au photophore une conformation globalement conique ou analogue, telle que pyramidale. Ces dispositions sont telles que l'organe générateur de lumière est susceptible de se trouver confiné à l'intérieur d'un volume délimité par une paroi de révolution ou analogue du photophore. A titre indicatif, la coiffe est d'une hauteur H2 et d'un diamètre D2, le rapport entre la hauteur H2 et le diamètre D2 étant de l'ordre compris entre 0,2 et 2. On notera qu'un rapport de l'ordre de 1 est particulièrement satisfaisant au regard des angles d'inclinaison des facettes qui ont été énoncés.

Un tel agencement en coiffe du photophore trouve notamment son utilité pour une paroi à irradier qui est celle d'un organe de l'installation comportant une paroi de fond, tel qu'un filtre à particules cylindrique ou analogue. Il est dans ce cas proposé d'exploiter cette paroi de fond pour fixer l'organe générateur de lumière et le photophore, par emboîtement, par vissage, ou analogue par exemple.

### Description des figures.

La présente invention sera mieux comprise à la lecture de la description qui va en être faite d'exemples de réalisation, en relation avec les figures des planches annexées dans lesquelles :
La fig.1 est un schéma illustrant en coupe transversale partielle un dispositif de traitement par photocatalyse d'air ventilé selon un premier exemple de réalisation d'une première variante de la présente invention.
La fig.2 est un schéma de face du dispositif illustré sur la fig.1.
La fig.3 est un schéma illustrant en coupe transversale partielle une application du dispositif illustré sur les fig.1 et fig.2.
La fig.4 est un schéma illustrant en coupe transversale partielle un deuxième exemple de réalisation de la première variante de la présente invention.
La fig.5 est un schéma illustrant en coupe axiale un dispositif de traitement par photocatalyse d'air ventilé selon une deuxième variante de réalisation de la présente invention.
Les fig.6 est un schéma illustrant de dessus le dispositif représenté sur la fig.5.
La fig.7 est un schéma illustrant en perspective une application du dispositif illustré sur les fig.5 et fig.6.

Sur les figures, un dispositif de traitement d'air par photocatalyse circulant à l'intérieur d'un circuit d'une installation de chauffage, de ventilation et/ou d'air conditionné, associe une paroi (1,2,3,4) revêtue d'un agent photocatalytique, avec une source lumineuse. Cette dernière est principalement composée d'au moins un organe générateur de lumière (5,5',6) et d'un photophore (7,8,9) en matériau translucide, tel que méthacrylate ou polyméthacrylate de méthyle. Ce photophore (7,8,9) est pourvu à l'une au moins de ses faces externes de facettes (10,11,12), pour diffuser vers la paroi à irradier (1,2,3,4) une multitude de faisceaux lumineux (13) suivant des orientations respectives, à partir de la lumière produite par le générateur de lumière (5,5',6). On notera à ce stade de la description que ladite paroi (1,2,3,4) est celle d'un organe participant de l'installation de purification de l'air circulant à l'intérieur du circuit, tel qu'un évaporateur (14) ou un filtre à particules (15,16).

On relèvera à ce stade de la description que le nombre, la conformation et les positions successives des divers organes de purification que l'installation est susceptible de comporter sont indifférents au regard de la portée de la présente invention, de même que le sens de circulation d'air successivement à travers ces organes. En outre, les facettes (10,11,12) ménagées sur le photophore (7,8,9) visent à irradier au mieux les faces d'une paroi (1,2,3,4) qui sont notamment orientées transversalement à l'orientation générale d'extension du photophore (7,8,9), que ce dernier soit globalement plan ou à extension axiale.

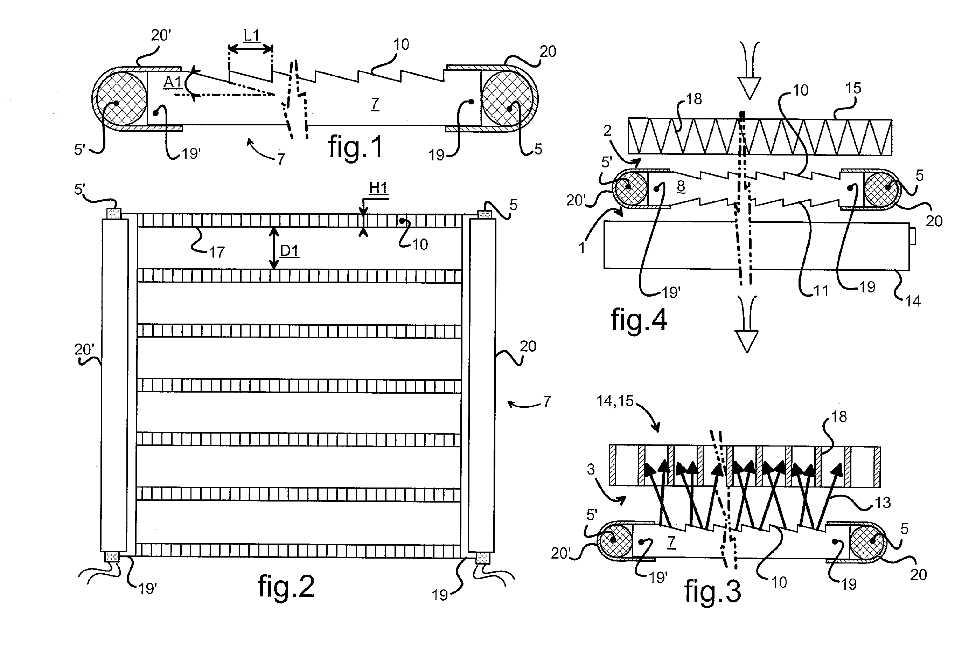

Sur la variante de réalisation représentée sur les fig.1 à fig.4, la source lumineuse (5,5') est destinée à coopérer avec une paroi (1,2) d'un organe globalement plan de l'installation de ventilation, tel qu'un filtre à particules (15) et/ou un évaporateur (14). Le photophore (7,8) est composé d'une pluralité de réglettes (17) qui sont pourvues d'une multitude de facettes (10,11) sur au moins une de leurs faces externes destinée à être placée en regard sur la paroi à irradier (1,2). On remarquera plus particulièrement sur l'exemple de réalisation illustré sur les fig.1 à fig.3, qu'une seule face externe des réglettes (17) est pourvue de facettes (10), tandis que sur l'exemple de réalisation illustré sur la fig.4, deux faces opposées des réglettes (17) sont pourvues de facettes (10,11) pour irradier respectivement l'évaporateur (14) et le filtre à particules (15) dans l'exemple de réalisation illustré.

Les facettes (10,11) sont notamment inclinées dans le plan général d'extension des réglettes (17) d'un angle A1 de l'ordre compris entre 10° et 30°, pour une longueur d'extension L1 des facettes 10 ou 11 comprise entre 3 mm à 7 mm. On comprendra que l'exemple préféré de réalisation illustré n'est en rien restrictif quant aux modalités d'agencement des facettes, celles-ci pouvant être avantageusement prismatiques sans sortir du cadre de la présente invention.

En se reportant plus particulièrement sur la fig.3, les facettes (10) ménagées sur les réglettes (17) permettent d'irradier la paroi (3) d'un organe globalement plan de l'installation de chauffage, de ventilation et/ou d'air conditionné, tel qu'un évaporateur (14) ou un filtre à particules (15), suivant une multitude de faisceaux lumineux (13). Cette irradiation de la paroi (3) est obtenue y compris vers l'intérieur de cavités (18) que comporte éventuellement cet organe plan (14,15).

En revenant à la fig.2, les réglettes 17 sont espacées les unes des autres d'une distance D1. Sur l'exemple de réalisation illustré, cette distance D1 est de l'ordre du tiers de la hauteur H1 des réglettes (17). Ces dernières (17) sont constitutives d'un ensemble monobloc de manière à être reliées entre elles à leurs extrémités par des éléments de bordure latérale 19,19' du photophore 7 ou 8. Ces éléments de bordure 19,19', eux aussi translucides, sont en relation avec un organe générateur de lumière respectif 5 et 5', de manière à autoriser le passage de la lumière produite à travers les réglettes 17 jusqu'à son émergence à travers les facettes 10 et/ou 11 en pluralité de faisceaux lumineux 13. En outre, ces éléments de bordure 19,19' sont mis à profit pour la fixation des réglettes 17 sur les organes générateurs de lumière 5,5', par l'intermédiaire d'organe de jonction 20,20', de préférence élastiquement déformables, qui sont conjointement en prise sur les éléments de bordure 19,19' et sur les organes générateurs de lumière 5,5' correspondants.

A titre d'illustration sur la fig.4, l'air est susceptible de circuler de manière à traverser en premier lieu le filtre à particules (15), puis le photophore (8), puis enfin l'évaporateur (14). Cependant comme indiqué plus haut, il doit être compris que le sens de circulation d'air et le nombre d'organes de purification que comporte l'installation, ainsi que leurs conformations et emplacements relatifs, sont indifférents quant à la portée de la présente invention.

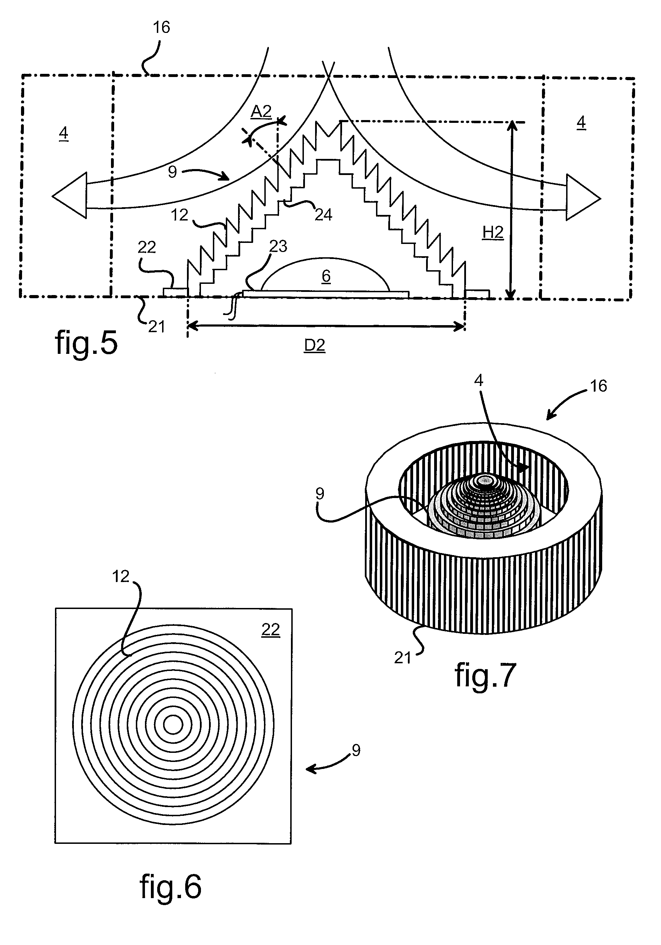

Sur les fig.5 à fig.7, le photophore (9) est à extension axiale pour être placé à l'intérieur de l'évidement axial que comporte un filtre à particules cylindrique courant (16), pour irradier les cloisons radiales filtrantes qu'il comporte. Ce photophore (9) est organisé en coiffe globalement conique, de manière à couvrir l'organe générateur de lumière (6) placé en son centre. Le filtre à particules (16) comportant une paroi de fond (21), celle-ci est mise à profit pour fixer le photophore (9) et l'organe générateur de lumière (6), qui comportent chacun une semelle (22,23) à cet effet.

A titre d'illustration sur la fig.5, l'air est susceptible de circuler depuis une admission axiale à l'intérieur d'un filtre cylindrique (16), pour être dévié par le photophore (9) vers les cloisons radiales du filtre (16). On relèvera que la conformation conique du photophore (9) favorise la répartition vers les cloisons radiales du filtre (16) de l'air admis axialement à l'intérieur de ce dernier (16), l'air venant se briser sur le dôme du photophore (9). On comprendra tel que visé plus haut que sans déroger aux règles de l'invention, l'air est susceptible d'être inversement admis à travers les cloisons filtrantes du filtre (16) pour être ensuite dévié pour son évacuation axiale.

Les facettes (12) sont successivement ménagées de manière étagée sur le pourtour de la face externe du photophore (9), en étant de conformation globalement annulaire. On comprendra là encore que la conformation des facettes (12) illustrées pour exemple n'est en rien limitative quant à la conformation qu'il est susceptible de leur être donné. Notamment, ces facettes (12), à l'instar de la variante précédemment illustrée, peuvent être individuellement de conformation prismatique et comporter plusieurs facettes élémentaires orientées suivant des plans concourants. Par exemple encore, les facettes (12) sont globalement à extension axiale sur la variante illustrée, mais sont susceptibles de comporter elles-mêmes des facettes élémentaires, voire d'être axialement inclinées d'un angle A1 analogue à celui de la variante précédemment illustrée.

On notera par ailleurs que selon la variante de réalisation représentée sur ces figures, le photophore (9) est susceptible de comporter à sa face interne des reliefs à facettes (24) destinés à réfléchir la lumière produite par le générateur de lumière 6 vers les facettes (12) que comporte la face externe du photophore (9).

A titre indicatif et sur l'exemple illustré, le rapport entre la hauteur H2 du photophore (9) et son diamètre D2 est de l'ordre de (1), pour des facettes (12) d'une extension axiale de l'ordre comprise entre 3 mm et 7 mm. On remarquera encore sur l'exemple illustré que les faces internes des anneaux formant les facettes (12) sont inclinées d'un angle A2 compris entre 10° et 30° par rapport à l'axe général d'extension du photophore (9), pour favoriser la multiplication des facettes et le passage à leur travers de la lumière produite, pour favoriser la réflexion de cette dernière en une pluralité de faisceaux lumineux à orientations concourantes.

## Revendications

1. Dispositif de traitement d'air circulant à l'intérieur d'un circuit d'une installation de chauffage, de ventilation et/ou d'air conditionné, notamment d'un habitacle de véhicule, par photocatalyse comportant une source lumineuse (5,5' ;6) d'irradiation d'au moins une paroi (1,2,3,4) revêtue d'un agent photocatalytique placée dans le chemin de circulation d'air, **caractérisé en ce que** la source lumineuse associe au moins un organe générateur de lumière (5,5' ;6) et un photophore (7,8,9) à facettes (10,11,12), à travers lequel émerge la lumière générée pour irradier la paroi distante (1,2,3,4) d'un organe de l'installation revêtue de l'agent photocatalytique.

2. Dispositif de traitement d'air par photocatalyse selon la revendication 1, **caractérisé en ce que** les facettes (10,11,12) du photophore (7,8,9) sont ménagées sur l'une au moins de ses faces externes en étant orientées suivant au moins deux plans concourants par rapport à un profil du photophore (7,8,9) pris suivant l'une quelconque au moins de ses dimensions.

3. Dispositif de traitement d'air par photocatalyse selon la revendication 2, **caractérisé en ce que** les facettes (10,11,12) sont agencées en prismes répartis sur la face correspondante du photophore (7,8,9).

4. Dispositif de traitement d'air par photocatalyse selon l'une quelconque des revendications précédentes, **caractérisé en ce que** les facettes (10,11,12) sont inclinées suivant l'une quelconque des dimensions d'extension du photophore (7,8,9), d'un angle (A1) de l'ordre compris entre 10° et 30°, pour une extension des facettes (10,11,12) de l'ordre comprise entre 3 mm et 7 mm.

5. Dispositif de traitement d'air par photocatalyse selon l'une quelconque des revendications précédentes, **caractérisé en ce que** le photophore (7,8) est formé d'une pluralité de réglettes (17), d'une hauteur H1, espacées les unes des autres d'une distance D1 et en relation mutuelle à l'une au moins de leurs extrémités longitudinales avec un dit organe générateur de lumière (5,5').

6. Dispositif de traitement d'air par photocatalyse selon la revendication 5, **caractérisé en ce que** l'organe générateur de lumière (5,5') est placé latéralement à la paroi irradiée (1,2,3) pour l'éloigner du chemin de circulation d'air.

7. Dispositif de traitement d'air par photocatalyse selon l'une quelconque des revendications 5 et 6, **caractérisé en ce que** la distance (D1) de séparation des réglettes (17) les unes des autres est de l'ordre comprise entre le double et le quadruple de la hauteur (H1) des réglettes (17).

8. Dispositif de traitement d'air par photocatalyse selon l'une quelconque des revendications 4 à 7, **caractérisé en ce que** l'organe générateur de lumière (5,5') est un organe allongé étendu le long des faces latérales du photophore (7,8), qui constitue un support des réglettes (17) sur lequel ces dernières (17) sont rapportées par l'intermédiaire d'un organe de jonction (20,20').

9. Dispositif de traitement d'air par photocatalyse selon la revendication 8, **caractérisé en ce que** ledit organe de jonction (20,20') est constitué d'un organe élastiquement déformable conjointement en prise sur l'organe générateur de lumière (5,5') et sur les réglettes (17).

10. Dispositif de traitement d'air par photocatalyse selon l'une quelconque des revendications 1 à 4, **caractérisé en ce que** le photophore (9) est organisé en coiffe entourant l'organe générateur de lumière (6).

11. Dispositif de traitement d'air par photocatalyse selon la revendication 10, **caractérisé en ce que** la coiffe est évasée pour conférer au photophore (9) une conformation globalement conique, la face externe de cette coiffe comportant les facettes (12).

12. Dispositif de traitement d'air par photocatalyse selon l'une quelconque des revendications 10 et 11, **caractérisé en ce que** l'organe générateur de lumière (6) se trouve confiné à l'intérieur d'un volume délimité par une paroi de révolution du photophore (9).

13. Dispositif de traitement d'air par photocatalyse selon l'une quelconque des revendication 10 à 12, **caractérisé en ce que** la coiffe est d'une hauteur (H2) et d'un diamètre (D2), dont le rapport l'un à l'autre est de l'ordre compris entre 0,2 et 2.

14. Dispositif de traitement d'air par photocatalyse selon l'une quelconque des revendication 10 à 13, **caractérisé en ce que** la paroi irradiée (4) étant celle d'un organe de l'installation comportant une paroi de fond (21), l'organe générateur de lumière (6) et le photophore (9) sont fixés sur cette paroi de fond (21).
